# EUROPÄISCHE PATENTSCHRIFT

(11) **EP 1 547 671 B1**
(45) Veröffentlichungstag und Bekanntmachung des Hinweises auf die Patenterteilung: **26.08.2009**
(21) Anmeldenummer: 04106724.0
(22) Anmeldetag: 20.12.2004
(51) Int. Cl.: B01D 61/18, B01D 61/20, B01D 65/00, B01D 65/02, B01D 63/02, B01D 63/06

(54) **Keramischer Membranfilter zur Filtration von Flüssigkeiten**
Ceramic membrane filter for filtering liquids
Filtre à membrane en céramique pour la filtration de liquides

(30) Priorität: 23.12.2003 DE 10361472
(43) Veröffentlichungstag der Anmeldung: 29.06.2005
(73) Patentinhaber: MANN+HUMMEL GmbH, 71638 Ludwigsburg (DE)
(72) Erfinder: Tudyka, Stefan, 71642, Ludwigsburg (DE)

(56) Entgegenhaltungen:
- WO-A-02/074423
- WO-A-03/051495
- DE-A1- 10 023 787
- DE-A1- 19 956 145
- US-A- 4 878 928
- US-A- 5 655 212
- US-A- 5 750 026
- US-A1- 2003 061 791
- US-B1- 6 245 306

## Beschreibung

Die Erfindung bezieht sich auf einen keramischen Membranfilter zur Filtration von Flüssigkeiten nach dem Oberbegriff des Anspruches 1.

Ein keramischer Membranfilter wird in der Druckschrift WO 03/051495 A1 beschrieben. Der Membranfilter ist als Hohlfaser-Membranmodul ausgebildet und umfasst eine Mehrzahl parallel verlaufender Keramik-Hohlfasern in einem zylindrischen Gehäuse, in welches eine zu filtrierende Flüssigkeit einzuführen ist, welche eine oder zwei zu separierende Substanzen enthält. Die Substanz in der Flüssigkeit mit kleinerem Teilchendurchmesser dringt durch die poröse Hohlfaserwandung radial von außen in den Hohlfaserinnenraum ein und wird stirnseitig über den Hohlfaser-Innenraum aus dem Membranmodul abgeleitet. Das aufkonzentrierte Fluid mit der verbleibenden Substanz mit größerem Teilchendurchmesser, welche nicht in der Lage sind, durch die Poren der Hohlfasern zu dringen, wird aus dem Gehäuseinnenraum abgeführt.

Die Hohlfasern sind im Bereich ihrer beiden gegenüberliegenden Stirnseiten jeweils von einer scheibenförmigen Gussmasse eingefasst, über die die Hohlfasern am Filtergehäuse gehalten sind und die den Gehäuseinnenraum gegenüber der Außenseite strömungsdicht abdichtet.

Zur Regeneration der Hohlfaser-Membranelemente von dem an der Außenwandung der Hohlfasern angelagerten Filterkuchen ist eine periodische Reinigung erforderlich. Hierfür können spezielle Maßnahmen zum Einsatz kommen, beispielsweise durch Einführen eines chemisch oder katalytisch wirksamen Reinigungsfluids in die Hohlfasern in Gegenstromrichtung, wodurch sich der auf der Hohlfaseraußenwandung angelagerte Filterkuchen löst. Die Durchführung derartiger Maßnahmen erfordert aber einen erheblichen Aufwand.

Eine weitere Möglichkeit zur Regeneration des keramischen Filterelementes besteht im Abbrennen des angelagerten Filterkuchens, wofür aber eine Mindesttemperatur von circa 150°C erforderlich ist. Zum Abbrennen werden die Membranelemente aus dem Filtergehäuse entnommen, in einem Ofen auf die Abbrenntemperatur erhitzt und auf dieser Temperatur über einen Zeitraum von ein bis drei Stunden gehalten. Auch diese Regenerationsmaßnahme erfordert einen erheblichen Aufwand.

Aus der US 5,655,212 sind keramische Filterelemente mit Zylinderform bzw. Scheibenform bekannt. Vorgesehen sind eine Mehrzahl axial hintereinander angeordneter und parallel positionierter, scheibenförmiger Keramikscheiben. Die Filtration erfolgt in Axialrichtung, wobei die keramischen Filterscheiben wie herkömmliche Filterelemente fungieren, indem sich die ausfiltrierten Filterpartikel an der Anströmseite der Keramikscheiben anlagern. Die Keramikscheiben weisen eine verhältnismäßig große Dicke auf, die es erlaubt, Heizelemente in die Scheiben zu integrieren.

Der Erfindung liegt das Problem zugrunde, einen keramischen Membranfilter zur Filtration von Flüssigkeiten zu schaffen, dessen keramisches Membranelement mit einem verhältnismäßig geringen Aufwand zu regenerieren ist. Der Regenerationsprozess soll insbesondere bei eingebautem Membranelement im Filtergehäuse durchgeführt werden können.

Dieses Problem wird erfindungsgemäß mit den Merkmalen des Anspruches 1 gelöst. Die Unteransprüche geben zweckmäßige Weiterbildungen an.

Bei dem erfindungsgemäßen, keramischen Membranfilter ist dem Filtergehäuse ein Heizelement zugeordnet, welches bedarfsweise eingeschaltet werden kann, um die im Filtergehäuse befindlichen keramischen Membranelemente auf Abbrenntemperatur zu erwärmen und hierdurch ein Abbrennen des angelagerten Filterkuchens bzw. der Verschmutzungen zu bewirken. Ein Ausbau der Membranelemente ist nicht erforderlich, vielmehr können die Membranelemente in ihrer Einbauposition im Filtergehäuse verbleiben, wodurch sich der Aufwand für die Regeneration der Membranelemente erheblich verringert.

Als Heizelement wird eine interne Heizquelle verwendet. Als interne Heizquelle ist das Heizelement in das Filtergehäuse integriert, wobei in diesem Fall vorteilhaft eine elektrische Widerstandsheizung als Heizelement eingesetzt wird. Diese Ausführung mit integriertem Heizelement besitzt den Vorteil einer kompakten Ausführung sowie einer unmittelbaren Wärmeabgabe vom Heizelement auf das keramische Membranelement, welches von den Ablagerungen zu reinigen ist.

Bevorzugt ist ein Temperatursensor im Filtergehäuse angeordnet, über den die aktuelle Temperatur im Bereich des keramischen Membranelementes ermittelt wird und der mit dem Heizelement bzw. einer Regel- und Steuerelektronik des Heizelementes funktionsgekoppelt ist. Der Temperatursensor ermittelt den Temperatur-Istwert und erlaubt über eine Betätigung des Heizelementes eine Einstellung auf den gewünschten Sollwert für die thermische Regeneration.

Um eine gleichmäßige Erwärmung des Membranelementes über die wirksame Länge innerhalb des Filtergehäuses zu gewährleisten, kann es zweckmäßig sein, eine Mehrzahl von Heizelementen über die Länge verteilt vorzusehen. Diese Ausführung bietet sich insbesondere bei etwa punktförmigen Wärmequellen an. Darüber hinaus kann es aber auch zweckmäßig sein, beispielsweise Heizdrähte vorzusehen, welche sich über die Länge des Filtergehäuses erstrecken.

Voraussetzung für eine erfolgreiche, thermische Regeneration ohne Beschädigung vorhandener Bauteile ist eine Temperaturstabilität bis zur erforderlichen Abbrenntemperatur der während des Abbrennprozesses im Filtergehäuse verbleibenden Bauteile. Verbleibende Bauteile sind im Wesentlichen sowohl die stirnseitigen Einfassungen, über die die keramischen Hohlfasern im Filtergehäuse gehalten werden, als auch die Abdichtungen, die an den Enden der keramischen Membranelemente zur Abgrenzung von Permeat- und Feedraum eingesetzt werden. Die Einfassungen und die Abdichtungen sollten aus einem Material bestehen, welches die geforderte Abbrenntemperatur von zumindest 150° C ohne Beschädigung übersteht. Die Einfassungen werden in der Regel in das Filtergehäuse eingepottet, wobei sowohl organische Pottmaterialen wie zum Beispiel Polyurethan oder Epoxid als auch anorganische Pottmaterialen wie Zement, Glas oder Keramik, beispielsweise Aluminiumoxid, verwendet werden.

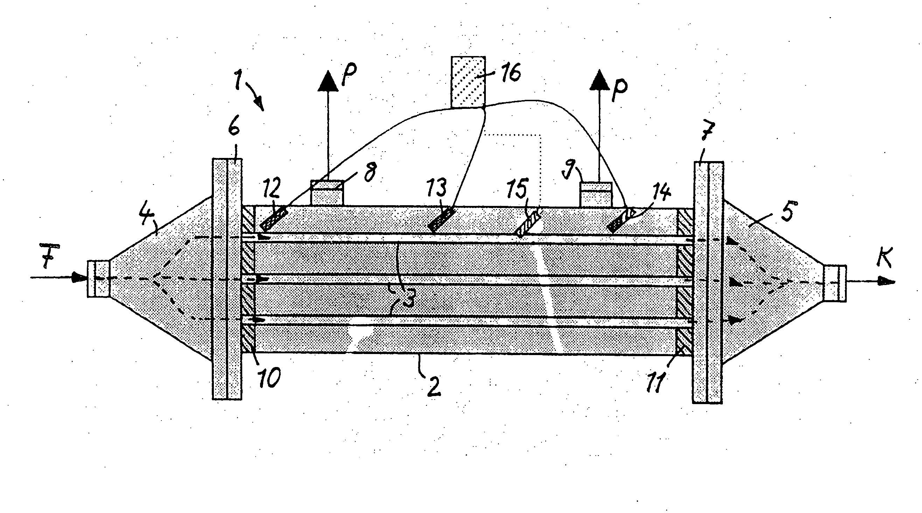

Weitere Vorteile und zweckmäßige Ausführungen sind den weiteren Ansprüchen, der Figurenbeschreibung und der Zeichnung zu entnehmen, die einen keramischen Membranfilter zur Filtration von Flüssigkeiten zeigt, wobei in einem Filtergehäuse des Membranfilters mehrere Heizelemente zum Beheizen der Membranelemente angeordnet sind.

Der dargestellte Membranfilter 1 wird zur Filtration von Flüssigkeiten eingesetzt und umfasst ein Filtergehäuse 2, welches vorteilhaft aus Edelstahl gefertigt und hohlzylindrisch bzw. rohrförmig ausgebildet ist, sowie im Innenraum des Filtergehäuses 2 aufgenommene, axial verlaufende, keramische Membranelemente 3, welche rohrförmig bzw. als Hohlfasern ausgeführt und deren Wandungen porös ausgebildet sind, so dass Teilchen oder Flüssigkeiten mit einer Teilchengröße kleiner als der Porendurchmesser durch die Wandung der Membranelemente dringen können. Als Membranelemente kommen sowohl konventionelle, keramische Rohrmembranen (Mono- und Multikanalelemente) als auch keramische Kapillar- oder Hohlfasermembranen in Betracht. Als Keramikmaterial können anorganische Materialien wie z. B. Aluminiumoxid (Al₂O₃), Zirkonoxid, Titanoxid, Siliziumcarbid oder Siliziumoxid verwendet werden.

Das Filtergehäuse 2 ist im Bereich seiner Stirnseiten von Anschlussstutzen 4 und 5 verschlossen, welche an Flanschen 6 und 7 des Filtergehäuses 2 gehalten sind, wobei die Flansche 6 und 7 gegenüber dem Rohrdurchmesser des Filtergehäuses einen vergrößerten Durchmesser aufweisen. Die Anschlussstutzen 4 und 5 können bei Bedarf von den Flanschen 6 und 7 gelöst werden.

Die Anströmung erfolgt axial über den Anschlussstutzen 4, durch den ungereinigtes, flüssiges Fluid F (Feed) dem Membranfilter 1 zugeführt wird. Über den Innenraum des Anschlussstutzens 4 gelangt das Fluid F über die Stirnseiten der diversen Membranelemente 3 in den rohrförmigen Innenraum der Membranelemente, wobei das Permeat P - die auszufiltrierende Substanz - im Fluid F durch die porösen Wandungen der Membranelemente 3 hindurchtreten kann und sich im Gehäuseinnenraum des Filtergehäuses 2 ansammelt, aus dem das Permeat P über radiale Anschlüsse 8 und 9 aus dem Membranfilter 1 ausgeleitet wird. Das in den Membranelementen 3 verbleibende Fluid wird auf der gegenüberliegenden Stirnseite über den zweiten Anschlussstutzen 5 als Retentat bzw. Konzentrat K axial aus dem Membranfilter 1 ausgeleitet.

Die Membranelemente 3 sind in stirnseitigen Einfassungen 10 und 11 aufgenommen, welche die Membranelemente in ihrer Position im Filtergehäuse 2 halten und gegenüber dem Filtergehäuse abstützen. Darüber hinaus kommt den Einfassungen 10 und 11, die unmittelbar benachbart zum gehäuseseitigen Flansch 6 bzw. 7 liegen, auch eine Dichtungsfunktion zu, da die Einfassungen 10 und 11 den Gehäuseinnenraum gegenüber der Umgebung, insbesondere den Anschlussstutzen 4 und 5 abdichtet. Zur Verbesserung der Dichtwirkung können die Einfassungen 10 und 11 auch mit einem zusätzlichen Dichtmaterial belegt sein. Als Material für die Einfassungen, die insbesondere in das Filtergehäuse 2 eingepottet sind, kommen sowohl organische als auch anorganische Pottmaterialien in Betracht. Als organische Pottmaterialien können beispielsweise Polyurethan oder Epoxid verwendet werden, die eine Temperaturbeständigkeit bis ca. 120°C bis 150°C aufweisen. Anorganische Pottmaterialien besitzen eine höhere Temperaturbeständigkeit, die beispielsweise für Zement bei 800°C, für Glas bei 700°C und für Keramiken, insbesondere Aluminiumoxid bei etwa 1000°C liegt.

Für eine thermische Regeneration der Membranelemente 3 im Falle eines an den Membranelementen angelagerten Filterkuchens sind Heizelemente 12, 13 und 14 in das Filtergehäuse 2 integriert, welche mit einer außerhalb des Filtergehäuses 2 angeordneten Stromquelle 16 verbunden sind und bei Bedarf über die Stromquelle 16 zu beheizen sind. Die Heizelemente 12, 13 und 14 sind hierzu als Widerstandsheizung ausgebildet. Die Heizelemente 12, 13 und 14 sind über die axiale Länge des Filtergehäuses 2 verteilt angeordnet, um eine etwa gleichförmige Erwärmung der Membranelemente 3 sicherzustellen. Gegebenenfalls sind die Heizelemente 12, 13 und 14 auch als Heizdrähte ausgebildet, welche sich über die axiale Länge des Filtergehäuses erstrecken und gegebenenfalls auch ein Drahtgeflecht bilden können.

Den Heizelementen ist ein Temperatursensor 15 zugeordnet, welcher ebenfalls in das Filtergehäuse 2 integriert und in der Lage ist, den Temperatur-Istwert zu ermitteln, welcher im Filtergehäuse 2 bzw. unmittelbar an den Membranelementen 3 herrscht. Der Temperatur-Istwert wird der Stromquelle 16 bzw. einer Regel- und Steuereinrichtung zugeführt, über die die Stromquelle 16 einzustellen ist.

Die thermische Regeneration des Membranfilters 1 wird folgendermaßen durchgeführt:
Für den Fall, dass die Ausbrenntemperatur über 150°C liegt, werden üblicherweise zunächst im Filtergehäuse 2 angeordnete Dichtungselemente ausgebaut bzw. entfernt, welche in der Regel den Gehäuseinnenraum gegenüber der Umgebung flüssigkeitsdicht und druckdicht separieren. Liegt die Ausbrenntemperatur dagegen nicht höher als 150°C, können gegebenenfalls derartige Dichtungselemente auch im Gehäuseinnenraum verbleiben.
Anschließend wird die Stromquelle 16 eingeschaltet und werden die Heizelemente 12, 13 und 14 bis zum Erreichen der gewünschten Abbrenntemperatur, welche mit Hilfe des Temperatursensors 15 überwacht werden kann, beheizt. Das Ausbrennen erfolgt üblicherweise bei einer Temperatur von 150°C bis 250°C für eine Dauer von ein bis drei Stunden. Nach Beendigung des Ausbrennvorganges werden gegebenenfalls die Dichtungen wieder eingebaut.
Zur Verbesserung und Beschleunigung des Abbrennprozesses kann über den feedseitigen Anschluss im Bereich des Anschlussstutzens 4 ein den Abbrennvorgang unterstützendes Gas eingeleitet werden, wobei sich die Gaszusammensetzung nach der Art der Ablagerung richtet. Bei Ablagerungen mit hohem chemischen Sauerstoffbedarf wird ein Gasstrom mit hohem Sauerstoffgehalt eingesetzt. Für Ablagerungen mit geringem chemischen Sauerstoffbedarf kann Luft verwendet werden oder eine O₂-N₂-Gasmischung.
   Der über den Feedeingang einzuführende Gasstrom strömt durch das Innere der Membranelemente 3 und bewirkt eine Verbesserung des Abbrennprozesses. Der Gasstrom wird durch die Membranelemente 3 hindurchgeleitet und verlässt auf der Ausgangsseite den Membranfilter 1, über die üblicherweise das Konzentrat K abgeleitet wird. Während des Abbrennprozesses kann der Permeatausgang im Bereich der Anschlüsse 8 und 9, über die üblicherweise das Permeat P ausgeleitet wird, verschlossen werden, um zu verhindern, dass sich die Poren in den Wandungen der Membranelemente mit Abbrandfeststoffen festsetzen.
Gegebenenfalls kann der Abbrennprozess mit einer chemischen Reinigung kombiniert werden, bei der ein Lösungsmittel für einen definierten Zeitraum in das Filtergehäuse 2 eingeführt und/oder durch die Membranelemente 3 geleitet wird.

## Patentansprüche

1. Keramischer Membranfilter zur Filtration von Flüssigkeiten, mit mindestens einem keramischen Membranelement (3), das in einem Filtergehäuse (2) aufgenommen ist, und mit einem Heizelement (12, 13, 14) zum Abbrennen von Verschmutzungen an dem keramischen Membranelement (3),
**dadurch gekennzeichnet,**
**dass** das keramische Membranelement (3) axial verläuft und rohrförmig bzw. als Hohlfaser ausgeführt ist und poröse Wandungen aufweist und dass das Heizelement (12, 13, 14) in das Filtergehäuse (2) integriert ist.

2. Membranfilter nach Anspruch 1,
**dadurch gekennzeichnet,**
**dass** das Heizelement (12, 13, 14) als elektrische Widerstandsheizung ausgebildet ist.

3. Membranfilter nach Anspruch 1 oder 2,
**dadurch gekennzeichnet,**
**dass** ein mit dem Heizelement (12, 13, 14) funktionsgekoppelter Temperatursensor (15) im Filtergehäuse (2) angeordnet ist.

4. Membranfilter nach einem der Ansprüche 1 bis 3,
**dadurch gekennzeichnet,**
**dass** über die Länge des keramischen Membranelements (3) verteilt eine Mehrzahl von Heizelementen (12, 13, 14) angeordnet sind.

5. Membranfilter nach einem der Ansprüche 1 bis 4,
**dadurch gekennzeichnet,**
**dass** das Filtergehäuse (2) aus Edelstahl besteht.

6. Membranfilter nach einem der Ansprüche 1 bis 5,
**dadurch gekennzeichnet,**
**dass** eine Mehrzahl von Membranelementen (3) im Filtergehäuse (2) parallel geführt sind.

7. Membranfilter nach einem der Ansprüche 1 bis 6,
**dadurch gekennzeichnet,**
**dass** das keramische Membranelement (3) über eine Einfassung am Filtergehäuse (2) abgestützt ist.

8. Membranfilter nach Anspruch 7,
**dadurch gekennzeichnet,**
**dass** die Einfassung (10, 11) aus einem organischen Pottmaterial wie zum Beispiel Polyurethan oder Epoxid besteht.

9. Membranfilter nach Anspruch 7,
**dadurch gekennzeichnet,**
**dass** die Einfassung (10, 11) aus einem anorganischen Pottmaterial wie zum Beispiel Zement, Glas oder Keramik besteht.

## Claims

1. Ceramic membrane filter for filtering liquids, with at least one ceramic membrane element (3) which is accommodated in a filter housing (2), and with a heating element (12, 13, 14) that bums off residues from the ceramic membrane element (3),
**characterized in that**
the ceramic membrane element (3) runs axially and is designed as tube or hollow fiber and features porous walls, and that the heating element (12, 13, 14) is integrated in the filter housing (2).

2. Membrane filter according to claim 1,
**characterized in that**
the heating element (12, 13, 14) is designed as electric resistance heating.

3. Membrane filter according to claim 1 or 2,
**characterized in that**
a temperature sensor (15) coupled with the heating element (12, 13, 14) is arranged in the filter housing (2).

4. Membrane filter according to one of the claims 1 to 3,
**characterized in that**
a plurality of heating elements (12, 13, 14) is arranged over the length of the ceramic membrane element (3).

5. Membrane filter according to one of the claims 1 to 4,
**characterized in that**
the filter housing (2) consists of stainless steel.

6. Membrane filter according to one of the claims 1 to 5,
**characterized in that**
a plurality of membrane elements (3) are placed in parallel in the filter housing (2).

7. Membrane filter according to one of the claims 1 to 6,
**characterized in that**
the ceramic membrane element (3) is supported by a frame at the filter housing (2).

8. Membrane filter according to claim 7,
**characterized in that**
the frame (10, 11) consists of an organic ceramic material such as, for example, polyurethane or epoxy resin.

9. Membrane filter according to claim 7,
**characterized in that**
the frame (10, 11) consists of an inorganic ceramic material such as, for example, cement, glass or ceramic.

## Revendications

1. Filtre céramique à diaphragme destiné à la filtration de liquides, avec au moins un élément céramique à diaphragme (3) qui est logé dans un boîtier de filtre (2) et avec un élément de chauffage (12, 13, 14) permettant de brûler des saletés sur l'élément céramique à diaphragme (3),
**caractérisé en ce que**
l'élément céramique à diaphragme (3) s'étend en sens axial et/ou est réalisé sous forme de tube ou de fibre creuse et présente des parois poreuses, et que l'élément de chauffage (12, 13, 14) est intégré dans le boîtier de filtre (2).

2. Filtre à diaphragme selon la revendication 1,
**caractérisé en ce que**
l'élément de chauffage (12, 13, 14) est réalisé comme chauffage électrique par résistance.

3. Filtre à diaphragme selon la revendication 1 ou 2,
**caractérisé en ce qu'**
une sonde de température (15) dont le fonctionnement est relié à l'élément de chauffage (12, 13, 14) est disposée dans le boîtier de filtre (2).

4. Filtre à diaphragme selon l'une des revendications 1 à 3,
**caractérisé en ce que**
plusieurs éléments de chauffage (12, 13, 14) sont répartis sur la longueur de l'élément céramique à diaphragme (3).

5. Filtre à diaphragme selon l'une des revendications 1 à 4,
**caractérisé en ce que**
le boîtier de filtre (2) se compose d'acier inoxydable.

6. Filtre à diaphragme selon l'une des revendications 1 à 5,
**caractérisé en ce que**
plusieurs éléments à diaphragme (3) sont disposés de façon parallèle dans le boîtier de filtre (2).

7. Filtre à diaphragme selon l'une des revendications 1 à 6,
**caractérisé en ce que**
l'élément céramique à diaphragme (3) est soutenu par un encadrement sur le boîtier de filtre (2).

8. Filtre à diaphragme selon la revendication 7,
**caractérisé en ce que**
l'encadrement (10, 11) se compose d'un matériau en céramique organique comme par exemple du polyuréthane ou de l'époxy.

9. Filtre à diaphragme selon la revendication 7,
**caractérisé en ce que**
l'encadrement (10, 11) se compose d'un matériau en céramique inorganique comme par exemple du ciment, du verre ou du céramique.
